# EUROPÄISCHE PATENTSCHRIFT

(11) **EP 0 597 279 B1**
(45) Veröffentlichungstag und Bekanntmachung des Hinweises auf die Patenterteilung: **01.05.1996**
(21) Anmeldenummer: 93116824.9
(22) Anmeldetag: 19.10.1993
(51) Int. Cl.: H01H 3/14, E05F 15/00, B29C 45/14

(54) **Sicherheitsprofilstück mit Kontaktbändern**
Safety edge with contact strips
Bordure de sécurité avec bandes de contact

(30) Priorität: 07.11.1992 DE 9215176 U
(43) Veröffentlichungstag der Anmeldung: 18.05.1994
(73) Patentinhaber: METEOR GUMMIWERKE K.H. BÄDJE GMBH & CO., D-31167 Bockenem (DE)
(72) Erfinder: Buchholz, Hans-Volker, D-31137 Hildesheim (DE)
(74) Vertreter: Kosel, Peter, Dipl.-Ing.

(56) Entgegenhaltungen:
- EP-A- 0 058 757
- EP-A- 0 383 671
- DE-A- 1 729 336
- US-A- 3 867 595

## Beschreibung

Die Erfindung betrifft ein Sicherheitsprofilstück gemäß dem Oberbegriff des Anspruchs 1.

Ein bekanntes Sicherheitsprofilstück dieser Art ist für den Einsatz in dem Rahmen von motorisch betätigbaren Kfz-Fenstern bestimmt. Es soll den Antrieb des Fensters selbsttätig abschalten, sobald während des Schließens des Fensters Gefahr besteht, daß ein Gegenstand, z.B. die Finger einer Hand, zwischen der Fensterscheibe und dem Rahmen eingeklemmt werden. Zur sachgerechten Funktion des Sicherheitsprofilstücks ist es erforderlich, den Schaltkanal hermetisch abzudichten und insbesondere zu verhindern, daß Feuchtigkeit in den Schaltkanal eintritt und zu unerwünschter Überbrückung der beiden Kontaktbänder führt. Bei dem bekannten Sicherheitsprofilstück sind deshalb dessen Enden mit einem Elastomerkitt verstrichen, der jedoch nicht aushärtet und klebrig bleibt. Dadurch ist aber eine dauerhafte hermetische Abdichtung der Enden des Sicherheitsprofilstücks nicht zu gewährleisten.

Der Erfindung liegt die Aufgabe zugrunde, eine dauerhafte hermetische Abdichtung der Enden des Schaltkanals zu schaffen. Diese Abdichtung soll schnell und für das Sicherheitsprofilstück und seine Bestandteile schonend hergestellt werden.

Diese Aufgabe ist durch die Merkmale des Anspruchs 1 gelöst. Vorzugsweise wird das thermoplastische Elastomer als Granulat in eine Spritzgießpresse eingebracht, plastifiziert und bei Formwerkzeugtemperaturen von z.B. 20 bis 80^{o} C vor das stirnseitige Ende des Sicherheitsprofilstücks eingespritzt. Das Formwerkzeug wird nicht beheizt, allenfalls temperiert, so daß die gesamte Anformung der Verschlußkappen bei so niedriger Temperatur geschehen kann, daß weder das Sicherheitsprofilstück selbst noch die darin eingelegten Kontaktbänder, noch die elektrischen Widerstände und ihre Anschlußkabel thermisch Schaden nehmen können. Vorzugsweise ist das Sicherheitsprofilstück selbst aus EPDM mit einer Härte von z.B. 55 bis 95 Shore A hergestellt. Die Verweildauer des Sicherheitsprofilstücks in dem Formwerkzeug ist verhältnismäßig sehr gering, weil die Verfestigung und Anbindung des thermoplastischen Elastomers an die Stirnfläche des Sicherheitsprofilstücks sehr schnell vor sich geht. So ergehen sich für die Anbringung der Verschlußkappen an das Sicherheitsprofilstück kürzestmögliche Taktzeiten, was bei einem Massenartikel wie dem vorliegenden von erheblicher wirtschaftlicher Bedeutung ist. Die so angeformten Verschlußkappen aus thermoplastischem Elastomer verschließen den Schaltkanal des Sicherheitsprofilstücks dauerhaft hermetisch dicht. So fertiggestellte Sicherheitsprofilstücke können überall dort mit großem Erfolg eingesetzt werden, wo bei motorisch angetriebenen Elementen, insbesondere bei Fahrzeugen, ein Einquetschen von Gegenständen oder Körperteilen zu befürchten ist. Als Beispiele seien bei Kraftfahrzeugen aller Art Fenster, Schiebedächer, die Verdeckdecken von Cabriolets, bei Bussen außerdem die Dachbe- und -entlüftungen, sowie bei Eisanbahn, Straßenbahn und U-Bahn die Türen, erwähnt. In all diesen Fällen ist eine Absicherung der motorisch angetriebenen Teile auch ohne Sichtkontrolle des Betätigenden unerläßlich, um für Personen und Sachen Schaden abzuwenden. Es ist eine sichere selbsttätige Abschaltung des motorischen Antriebs erforderlich, sobald beim Schließen des betreffenden Elements ein Widerstand auftritt. Diese Aufgabe ist mit dem erfindungsgemäßen Sicherheitsprofilstück einwandfrei und dauerhaft zu erfüllen.

Die speziellen thermoplastischen Elastomere gemäß einem der Ansprüche 2 bis 6 haben sich als für den angestrebten Zweck besonders vorteilhaft erwiesen. In allen Fällen besitzt das erfindungsgemäß angeformte thermoplastische Elastomer der Verschlußkappen gummiähnlichen Charakter. Dies ist für den Einbau und den Betrieb des Sicherheitsprofilstücks von zusätzlichem Vorteil.

Die Maßnahme nach Anspruch 7 oder 8 verbessern bei Bedarf die Haftung zwischen dem Stoff des Sicherheitsprofilstücks, z.B. EPDM, einerseits und dem thermoplastischen Elastomer der Verschlußkappen andererseits.

Die Merkmale des Anspruchs 9 gestatten einerseits eine sachgerechte Verlegung der Anschlußkabel und andererseits eine hermetische Abdichtung der Kabeldurchführung.

Gemäß Anspruch 10 läßt sich bei Bedarf die Bindung zwischen dem Kabelmantel und der Durchlaßöffnung verbessern, um auch hier eine dauerhaft hermetische Abdichtung zu erzielen.

Durch die Merkmale des Anspruchs 11 sind die Widerstände einerseits fixiert und andererseits vor schädlichen äußeren Einwirkungen geschützt Untergebracht. Eine Temperaturschädigung der Widerstände ist wegen der besonders niedrigen Temperaturen beim Anformen der Verschlußkappen ausgeschlossen.

Gemäß Anspruch 12 erleichtert und beschleunigt die Selbstklebefolie die Anbringung des Sicherheitsprofilstücks an seinem Betriebsort. Solche Selbstklebefolien sind in der Regel bis zum Einbau mit einem Liner abgedeckt. Sowohl die Selbstklebefolie als auch der Liner sind temperaturempfindlich, nehmen jedoch bei den besonders niedrigen Temperaturen während des Anformens der Verschlußkappen keinerlei Schaden. So kann also die Selbstklebefolie in vorteilhafter Weise schon vor dem Anformen der Verschlußkappen auf das Sicherheitsprofilstück aufgebracht werden.

Weitere Merkmale und Vorteile der Erfindung ergeben sich aus der nachfolgenden Beschreibung eines Ausführungsbeispiels anhand der Zeichnungen. Es zeigt:
Fig. 1 die Ansicht gemäß Linie I-I in Fig. 2 auf eine Stirnfläche eines Sicherheitsprofilstücks und
Fig. 2 die Seitenansicht gemäß Linie II-II in Fig. 1 in verkleinerter Darstellung.

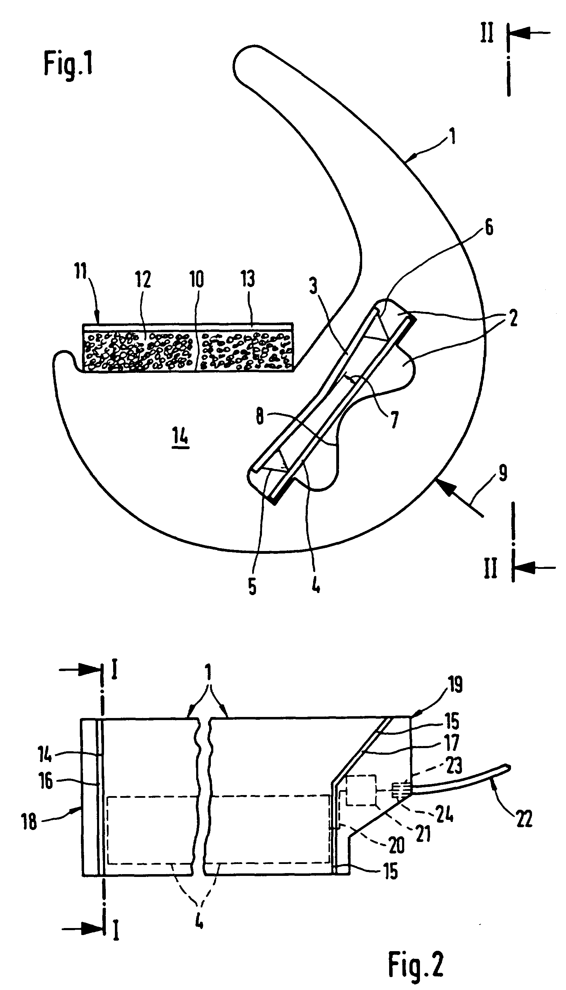

Fig. 1 zeigt ein Sicherheitsprofilstück 1 in Stirnansicht, bevor es mit Verschlußkappen ausgerüstet wird. Es ist als Schlauchprofil mit einem durchgehenden Schaltkanal 2 ausgebildet und aus EPDM hergestellt. In den Schaltkanal 2 sind zwei durchgehende, elektrisch leitende Kontaktbänder 3 und 4 eingelegt. Die Kontaktbänder 3, 4 werden normalerweise durch elektrisch nicht leitende Abstandsleisten 5 und 6 in einem Abstand 7 voneinander gehalten. Die Abstandsleisten 5, 6 sind an dem Kontaktband 3, z.B. durch Klebung, befestigt.

An der von dem Kontaktband 3 abgewandten Seite des Kontaktbandes 4 liegt ein durchgehender Wulst 8 des Sicherheitsprofilstücks 1 mittig an. Wenn nun z.B. dann, wenn beim motorischen Schließen eines Kraftfahrzeugfensters Finger zwischen der Scheibe und dem Rahmen eingequetscht zu werden drohen, in Richtung eines Pfeils 9 eine Kraft auf das Sicherheitsprofilstück 1 ausgeübt wird, übt der Wulst 8 eine entsprechende Druckkraft auf das Kontaktband 4 so lange aus, bis der Abstand 7 zu Null wird und über die Kontaktbänder 3, 4 ein Stromkreis geschlossen wird, der zur sofortigen Abschaltung des Antriebs für den Fensterheber führt. Sobald das Fenster dann wieder geöffnet wird, stellen sich dank der Eigenelastizitäten alle Elemente des Sicherheitsprofilstücks 1 und der Kontaktbänder 3, 4 wieder in die in Fig. 1 gezeichnete Ausgangslage zurück, in welcher der vorbeschriebene Stromkreis aufgrund des Abstands 7 wieder unterbrochen ist.

Auf eine Aufnahmefläche 10 des Sicherheitsprofilstücks 1 ist eine doppelseitig klebende Selbstklebefolie 11 aufgeklebt. Die Selbstklebefolie 11 weist eine geschäumte Mittelschicht 12 auf und ist bis zum Einbau des Sicherheitsprofilstücks 1 mit einem Liner 13 abgedeckt.

Fig. 1 zeigt eine Stirnfläche 14 des Sicherheitsprofilstücks 1.

In Fig. 2 ist sowohl auf die Stirnfläche 14 als auch auf eine Stirnfläche 15 am anderen Ende des Sicherheitsprofilstücks 1 jeweils eine übertrieben dick dargestellte Kupplungsschicht 16 und 17, z.B. aus einem Polypropylenprimer, aufgetragen. Mit diesem Primer werden die Stirnflächen 14, 15 nur benetzt. Der Primer sollte nicht in den Schaltkanal 2 eindringen. Nach kurzem Ablüften oder Trocknen ist das Lösungsmittel aus dem Primer entwichen und sind die Kupplungsschichten 16, 17 bereit für das Anformen von Verschlußkappen 18 und 19 aus einem thermoplastischen Elastomer (TPE).

Das Kontaktband 4, und in gleicher Weise das in Fig. 2 nicht gezeichnete Kontaktband 3 sind über eine Leitung 20 an ihrem Ende mit einem in Fig. 2 nur schematisch dargestellten elektrischen Widerstand 21 verbunden, der seinerseits mit einem Anschlußkabel 22 verbunden ist. Das Anschlußkabel 22 ist in eine Durchlaßöffnung 23 der Verschlußkappe 19 geführt und über eine Kupplungsschicht 24 hermetisch dicht an die Verschlußkappe 19 angeformt. Wenn der Stoff des Mantels des Anschlußkabels 22 und das thermoplastische Elastomer der Verschlußkappe 19 aufeinander abgestimmt sind, ist eine solche Kupplungsschicht 24 entbehrlich.

Gleiches trifft dann zu, wenn der Stoff des Sicherheitsprofilstücks 1 und das thermoplastische Elastomer der Verschlußkappen 18, 19 aufeinander abgestimmt sind. Dann sind auch an den Stirnflächen 14, 15 die Kupplungsschichten 16, 17 entbehrlich.

Das Anformen der Verschlußkappen 18, 19 geschieht in einem an sich bekannten, geteilten Werkzeug, in das das Sicherheitsprofilstück 1 sowie die Leitungen 20, die elektrischen Widerstände 21 und die Anschlußkabel 22 eingelegt werden. Das Werkzeug weist außerdem zu den Verschlußkappen 18, 19 komplementäre Formausnehmungen auf. In einer dieser Ausnehmungen für die Verschlußkappe 19 liegen die Leitungen 20, die elektrischen Widerstände 21 und die Enden der Anschlußkabel 22. In die Formausnehmungen wird bei geschlossenem Werkzeug das außerhalb in einer Spritzgießpresse plastifizierte thermoplastische Elastomer eingespritzt. Sobald die eingespritzte Masse genügend verfestigt ist, wird das Formwerkzeug geöffnet und kann das an beiden Enden durch die Verschlußkappen 18, 19 hermetisch dicht verschlossene Sicherheitsprofilstück 1 gebrauchsfertig entnommen werden.

## Patentansprüche

1. Sicherheitsprofilstück (1) aus einem elektrisch isolierenden Gummi oder Gummiersatzstoff,
mit einem durchgehenden Schaltkanal (2), in dem zwei durchgehende, normalerweise in einem Abstand (7) voneinander gehaltene, elektrisch leitende Kontaktbänder (3,4) angeordnet sind,
wobei jedes Kontaktband (3,4) an einem Ende über einen elektrischen Widerstand (21) mit einem Anschlußkabel (22) verbunden ist,
und wobei der Schaltkanal (2) an jedem Ende durch ein Dichtelement verschlossen ist,
dadurch gekennzeichnet, daß jedes Dichtelement eine an das Sicherheitsprofilstück (1) angeformte, das Ende des Schaltkanals (2) hermetisch abdichtende Verschlußkappe (18,19) aus einem elektrisch isolierenden thermoplastischen Elastomer (TPE) aufweist.

2. Sicherheitsprofilstück nach Anspruch 1, dadurch gekennzeichnet, daß die Verschlußkappen (18,19) aus einem thermoplastischen Elastomer auf der Basis Styrol Ethylen Butylen Styrol (S-EB-S) bestehen.

3. Sicherheitsprofilstück nach Anspruch 1, dadurch gekennzeichnet, daß die Verschlußkappen (18,19) aus einem thermoplastischen Elastomer auf der Basis Styrol Butadien Styrol (SBS) bestehen.

4. Sicherheitsprofilstück nach Anspruch 1, dadurch gekennzeichnet, daß die Verschlußkappen (18,19) aus einem thermoplastischen Elastomer auf der Basis Styrol Isopren Styrol (SIS) bestehen.

5. Sicherheitsprofilstück nach Anspruch 1, dadurch gekennzeichnet, daß die Verschlußkappen (18,19) aus einem thermoplastischen Elastomer auf der Basis von Elastomerlegierungen als TPO-Blends oder TPO-Alloys, z.B. von vernetztem EPDM/Propylen-Blend (EPDM/PP) oder Ethylenvenylacetat/Vinylidenchlorid (EVA/PVDC), bestehen.

6. Sicherheitsprofilstück nach Anspruch 1, dadurch gekennzeichnet, daß die Verschlußkappen (18,19) aus einem thermoplastischen Elastomer auf der Basis von thermoplastischen Polyurethanen (TPU) bestehen.

7. Sicherheitsprofilstück nach einem der Ansprüche 1 bis 6, dadurch gekennzeichnet, daß zwischen dem Sicherheitsprofilstück (1) und jeder Verschlußkappe (18,19) eine Kupplungsschicht (16,17) angeordnet ist.

8. Sicherheitsprofilstück nach Anspruch 7, dadurch gekennzeichnet, daß die Kupplungsschicht (16,17) aus einem Polypropylenprimer besteht.

9. Sicherheitsprofilstück nach einem der Ansprüche 1 bis 8, dadurch gekennzeichnet, daß die Anschlußkabel (22) in eine Durchlaßöffnung (23) der zugehörigen Verschlußkappe (19) geführt und an eine Wand der Durchlaßöffnung (23) hermetisch dicht angeformt sind.

10. Sicherheitsprofilstück nach Anspruch 9, dadurch gekennzeichnet, daß zwischen der Wand der Durchlaßöffnung (23) und einem Mantel der Anschlußkabel (22) eine Kupplungsschicht (24) angeordnet ist.

11. Sicherheitsprofilstück nach einem der Ansprüche 1 bis 10, dadurch gekennzeichnet, daß die elektrischen Widerstände (21) ganz oder teilweise in eine (19) der Verschlußkappen (18,19) eingeformt sind.

12. Sicherheitsprofilstück nach einem der Ansprüche 1 bis 11, dadurch gekennzeichnet, daß es beim Anformen der Verschlußkappen (18,19) mit einer Selbstklebefolie (11) belegt ist.

## Claims

1. Safety moulding (1) made from electrically insulating rubber or rubber substitute,
having a continuous contact channel (2) in which two continuous, electrically conductive contact strips (3, 4), which are normally kept at a distance (7) from each other, are arranged,
wherein each contact strip (3,4) is connected at one end to a connecting cable (22) through an electrical resistance (21)
and wherein the contact channel (2) is closed at each end by a sealing element,
characterised in that each sealing element comprises a closure cap (18, 19) of an electrically insulating thermoplastic elastomer (TPE), said end cap being moulded onto the safety moulding (1) and forming a hermetic seal at the end of the contact channel (2).

2. Safety moulding according to claim 1, characterised in that the closure caps (18, 19) are made from a styrene-ethylene-butylene-styrene (S-EB-S) based thermoplastic elastomer.

3. Safety moulding according to claim 1, characterised in that the closure caps (18, 19) are made from a styrene-butadiene-styrene (SBS) based thermoplastic elastomer.

4. Safety moulding according to claim 1, characterised in that the closure caps (18, 19) are made from a styrene-isoprene-styrene (SIS) based thermoplastic elastomer.

5. Safety moulding according to claim 1, characterised in that the closure caps (18, 19) are made from a thermoplastic elastomer based upon elastomer combinations as TPO blends or TPO alloys, for example of crosslinked EPDM/propylene blend (EPDM/PP) or ethylene vinyl acetate/vinylidene chloride (EVA/PVDC).

6. Safety moulding according to claim 1, characterised in that the closure caps (18, 19) are made from a thermoplastic polyurethane (TPU) based thermoplastic elastomer.

7. Safety moulding according to one of claims 1 to 6, characterised in that a coupling layer (16, 17) is arranged between the safety moulding (1) and each closure cap (18, 19).

8. Safety moulding according to claim 7, characterised in that the coupling layer (16, 17) is made of a polypropylene primer.

9. Safety moulding according to one of claims 1 to 8, characterised in that the connecting cables (22) are passed through an aperture (23) in the associated closure cap (19) and are moulded to one wall of the aperture (23) to produce a hermetic seal.

10. Safety moulding according to claim 9, characterised in that a coupling layer (24) is arranged between the wall of the aperture (23) and a sleeve of the connecting cables (22).

11. Safety moulding according to one of claims 1 to 10, characterised in that the electrical resistances (21) are completely or partially moulded into one (19) of the closure caps (18, 19).

12. Safety moulding according to one of claims 1 to 11, characterised in that the moulding has a self-adhesive film (11) laid thereon when the closure caps (18, 19) are being moulded on.

## Revendications

1. Bande profilée de sécurité (1) en caoutchouc ou caoutchouc synthétique, électriquement isolante,
- comportant un canal d'inversion de commande (2) continu, dans lequel sont disposées deux bandes de contact (3, 4) continues, conductrices de l'électricité, et maintenues normalement à une certaine distance (7) l'une de l'autre,
- étant entendu que chaque bande de contact (3, 4) est reliée, à une extrémité, à un câble de raccordement (22), par l'intermédiaire d'une résistance électrique (21),
- et étant entendu que le canal d'inversion de commande (2) est fermé à chacune de ses extrémités par un élément d'étanchéité,
- caractérisée en ce que chaque élément d'étanchéité présente un bouchon de fermeture (18, 19), en élastomère thermoplastique (TPE) isolant électrique, moulé sur la bande profilée de sécurité (1) et assurant hermétiquement l'étanchéité du canal d'inversion de commande (2).

2. Bande profilée de sécurité suivant la revendication 1, caractérisée en ce que les bouchons de fermeture (18, 19) sont constitués par un élastomère thermoplastique à base de styrène-éthylène-butylène-styrène (S-EB-S).

3. Bande profilée de sécurité suivant la revendication 1, caractérisée en ce que les bouchons de fermeture (18, 19) sont constitués par un élastomère thermoplastique à base de styrène-butadiène-styrène (SBS).

4. Bande profilée de sécurité suivant la revendication 1, caractérisée en ce que les bouchons de fermeture (18, 19) sont constitués par un élastomère thermoplastique à base de styrène-isoprène-styrène (SIS).

5. Bande profilée de sécurité suivant la revendication 1, caractérisée en ce que les bouchons de fermeture (18, 19) sont constitués par un élastomère thermoplastique à base d'alliages d'élastomère sous la forme de mélange de TPO ou d'alliages de TPO, par exemple de mélange réticulé EPDM/Propylène (EPDM/PP) ou d'acétate éthylène-vinyle/chlorure de vinylidène (EVA/PVDC).

6. Bande profilée de sécurité suivant la revendication 1, caractérisée en ce que les bouchons de fermeture (18, 19) sont constitués par un élastomère thermoplastique à base de polyuréthanes thermoplastiques (TPU).

7. Bande profilée de sécurité suivant l'une des revendications 1 à 6, caractérisée en ce qu'entre la bande profilée de sécurité (1) et chaque bouchon de fermeture (18, 19), est disposée une couche de liaison (16, 17).

8. Bande profilée de sécurité suivant la revendication 7, caractérisée en ce que la couche de liaison (16, 17) est constituée par une couche de fond en polypropylène.

9. Bande profilée de sécurité suivant l'une des revendications 1 à 8, caractérisée en ce que les câbles de raccordement (22) sont guidés dans une ouverture (23) du bouchon de fermeture (19) correspondant, et sont moulés de façon hermétiquement étanche sur une paroi de l'ouverture de passage (23).

10. Bande profilée de sécurité suivant la revendication 9, caractérisée en ce qu'entre la paroi de l'ouverture de passage (23) et une gaine des câbles de raccordement (22), est disposée une couche de liaison (24) .

11. Bande profilée de sécurité suivant l'une des revendications 1 à 10, caractérisée en ce que les résistances électriques (21) sont moulées, complètement ou en partie, dans l'un (19) des bouchons de fermeture (18, 19).

12. Bande profilée de sécurité suivant l'une des revendications 1 à 11, caractérisée en ce qu'elle est recouverte par une feuille autocollante (11) lors du moulage des bouchons de fermeture (18, 19).
